# EUROPEAN PATENT SPECIFICATION

(11) **EP 1 895 266 B1**
(45) Date of publication and mention of the grant of the patent: **12.02.2014**
(21) Application number: 07017096.4
(22) Date of filing: 31.08.2007
(51) Int. Cl.: G01B 11/00, G01B 11/14, G01S 17/66

(54) **Method for measuring length by laser interference tracking and apparatus therefore**
Verfahren und Vorrichtung zum Messen der Länge mittels Laserinterferenzverfolgung
Procédé pour mesurer la longueur par traçage d'interférence laser et appareil correspondant

(30) Priority: 04.09.2006 JP 2006239471
(43) Date of publication of application: 05.03.2008
(73) Proprietor: Mitutoyo Corporation, Kanagawa 213-8533 (JP)
(72) Inventor: Tanimura, Yoshihisa, Tsukuba-shi Ibaraki 305-0854 (JP)
(74) Representative: Grünecker, Kinkeldey, Stockmair & Schwanhäusser

(56) References cited:
- EP-A2- 1 750 085
- US-A- 5 861 956
- US-A- 6 147 748
- CARL-THOMAS SCHNEIDER: "LASERTRACER - A NEW TYPE OF SELF TRACKING LASER INTERFEROMETER", PROCEEDINGS OF THE 8TH INTERNATIONAL WORKSHOP ON ACCELERATOR ALIGNEMENT, 13 September 2005 (2005-09-13), pages 1-6, XP55043262,

## Description

The present invention relates to a method for measuring a length by laser interference tracking and an apparatus therefor, which employs a reference sphere made into a measurement reference, a measurement side reflector disposed at an obj ect to be measured, a laser interferometer for outputting a measurement value in compliance with an increase and a decrease in the distance to the corresponding measurement side reflector, and an arcuate movement mechanism for turning an emission beam from the corresponding laser interferometer centering around the reference sphere, and measures the distance to a measurement side reflector in which the optical axes of an emission beam from the laser interferometer placed on the arcuate movement mechanism and a return beam thereto become parallel to each other by referencing the center coordinates of the reference sphere. In particular, the present invention relates to a method for measuring a length by laser interference tracking and an apparatus therefor, which is favorablyused for spatial correctionmeans of a three-dimensional coordinate measuring machine, history tracking means for trajectory of the distal end of a robot arm, movement tracking means of a tool rest of a machine tool, a tracking station to compose a non-orthogonal coordinate measurement system, securely remove an error in turningmotions of the laser interferometer main body with respect to the reference sphere at real time, and can implement highly reliable length measurement by laser interference tracking.

A tracking type laser interferometer (also called an "optical axis deflection type laser interferometer") has been known, in which displacement of a measurement side reflector is detected by irradiating a laser beam (called a "measurement optical beam") from a laser interference length measuring unit (hereinafter also called a "laser interferometer") toward a measurement side reflector (also called "recurrent reflecting means" or "retroreflector") disposed at an object to be measured, and utilizing interference of a laser beam reflected in the returning direction by the measurement side reflector, and at the same time, tracking is carried out by using changes in the position of the optical axis of the measurement optical beam by a two-axis turning mechanism.

For example, Japanese Published Examined Patent No. 2603429 (Patent Document 1) describes a tracking type laser interferometer for measuring relative displacement between a retroreflector 1 and a retroreflector 2 that is a target.

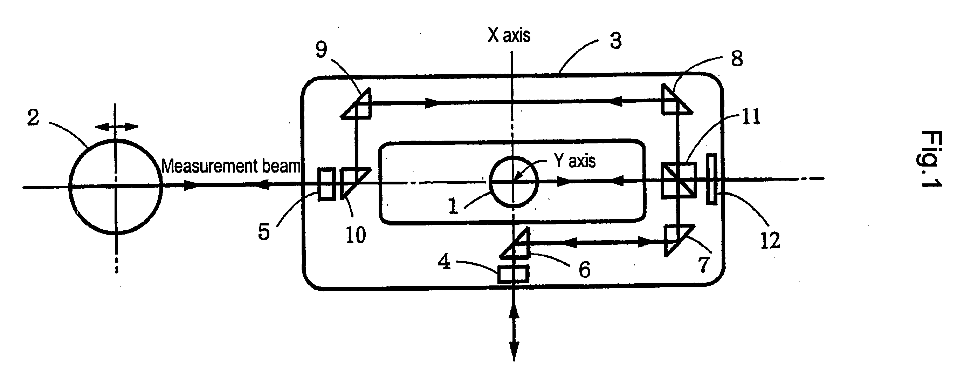

The tracking type laser interferometer illustrated in Figure 1 is provided with a first retroreflector 1, a second retroreflector 2 disposed at a moving reflector, a turning portion 3 that is rotatable, respectively, around the X axis and Y axis that are orthogonal centering around the first retroreflector 1, means for guiding a laser beam emitted from a laser beam source (not illustrated) to the turning portion 3 regardless of turning of the turning portion 3, and an optical system consisting of a plurality of optical components (1/4-waveplate 4, 5, prisms 6, 7, 8, 9, and 10, PBS (polarization beam splitter) 11) disposed and fixed on the turning portion 3.

The optical system divides a laser beam guided to the turning portion 3 by the PBS 11, and one laser beam thereby divided is caused to be incident into the first retroreflector 1 via an optical path orthogonal to the X axis, and at the same time, the other laser beam is projected onto the extension of the optical path and is caused to be incident into the second retroreflector 2, wherein reflection light can be obtained from the first retroreflector 1 and the second retroreflector 2, respectively.

Furthermore, the tracking type laser interferometer is provided with a detection portion (not illustrated) for detecting an amount of movement of the second retroreflector 2 based on interference of two reflection light beams obtained via the optical system, a four-division photodiode (PD) 12 acting as position detecting means disposed and fixed on the turning portion 3, into which a part of reflection light beams from the second retroreflector 2 is made incident, and which outputs a position signal responsive to an amount of shift of laser beams incident into the second retroreflector 2, and means (not illustrated) for controlling turning positions around the X axis and Y axis of the turning portion 3 so that the amount of shift becomes zero based on the position signal from the corresponding position detecting means.

However, in the art disclosed in Patent Document 1, there are some problems inpracticaluse, for example, (1) since a general Michelson interferometer is used as an interferometer wherein the reference beam and measurement beam are separated at a right angle at the PBS 11, reflection beams from the first and the second retroreflectors 1 and 2 are respectively caused to overlap each other again to bring about an interference state for length measurement, arrangement of optical components in a gimbal mechanism rotatable in two axes becomes remarkably complicated, and the number of components thereof is increased, wherein the cost thereof becomes expensive, (2) since it is remarkably complicated and difficult to level and align the laser beam disposed on the turning portion 3 in regard to the center position of the first retroreflector 1, (3) where the retroreflector is a spherical cat's eye, since the retroreflector is a special-order product made of a soft optical material whose refractive index is approximately 2, such a material is not available on the market, and the cost becomes expensive, and (4) if only a slight flaw and/or dust exist on the surface of the spherical cat's eye, the reflection light is disordered, wherein length measurement through interference will be disabled.

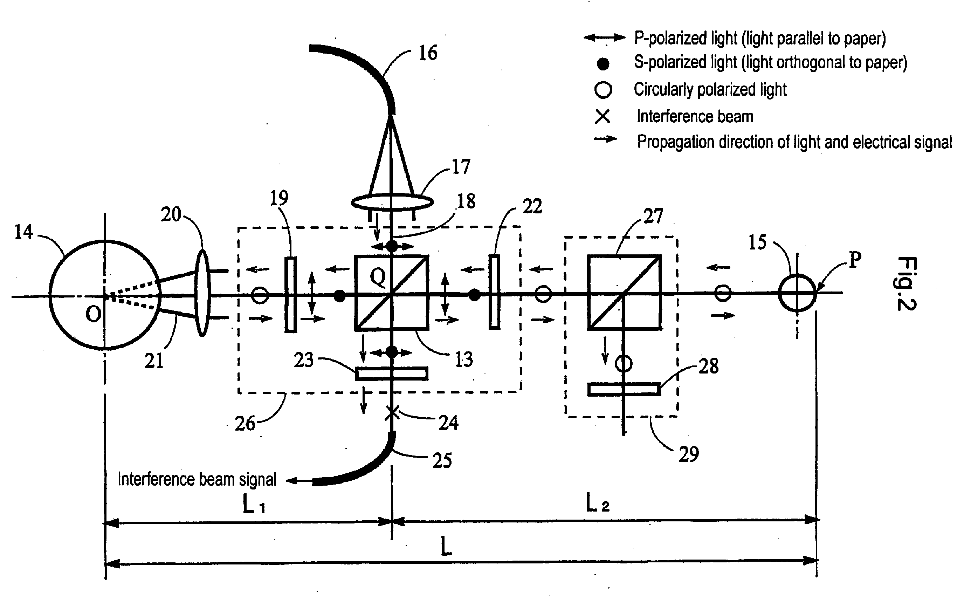

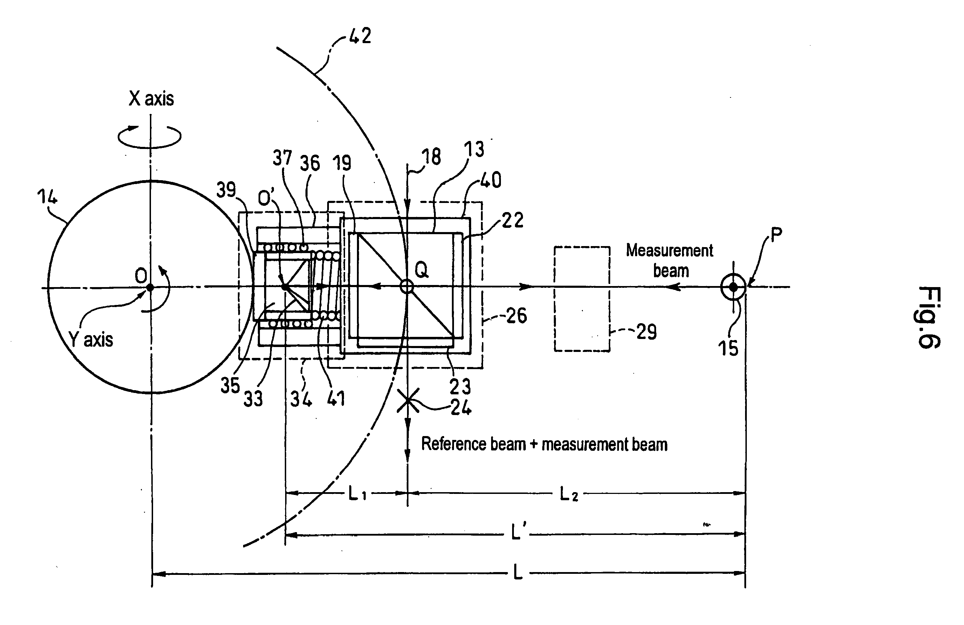

In order to solve such problems, in the Error Mapping of CMMs and Machine Tools by a single tracking interferometer, Annuals of the CIRP Vol.54/1/2005, 475/478 (Non-Patent Document 1), which was prepared by H.Schwenke, M. Franke, and J. Hannaford, a laser interferometer of special arrangement (hereinafter called a "special laser interferometer") is used to solve the above problems. That is, although the principle of the special interferometer is shown in FIG. 6 of USP6147748 (Patent Document 2), a brief description in which only those related to laser interference length measurement are extracted therefrom is shown in FIG. 2 hereof.

Herein, the special laser interferometer in FIG. 2 indicates a laser interference optical system consisting of a reference sphere 14, an objective lens 20, an interferometer main body 26 enclosed by a broken line, and a measurement side reflector (target) 15.

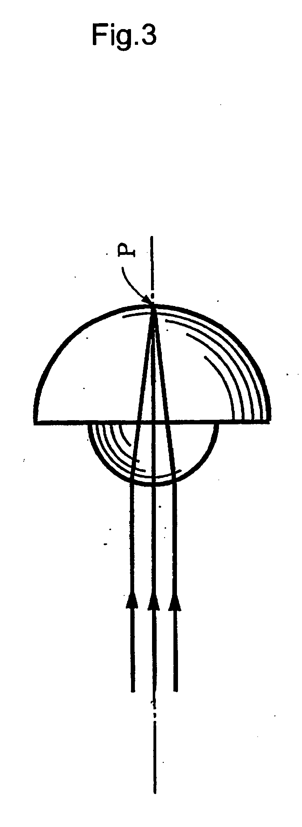

Differing from the above-described general Michelson interferometer, a great feature of the special laser interferometer shown in FIG. 2 exists in that no influence is exerted on length measurement unless the distance from the center O of the spatially fixed reference sphere 14 to the point P of the measurement side reflector (for example, a hemispherical retroreflector shown in FIG. 3) 15 (USP4889409: Patent Document 3) changes even if the start point Q of length measurement, that is, the PBS 13 is caused to move along the laser beam in the length measurement direction. In other words, no influence is exerted on length measurement unless L=L₁+L₂ changes even if L₁ or L₂ changes in FIG. 2. Also, there already are examples in which the special laser interferometer is utilized, for example, "Development of end standard based on servo control system" (Yokoyama and four other members, "A wavelength stabilized end standard" 46th Alliance Lecture related to Applied Physics, Pre-collected Papers (1999.3, Tokyo University of Science): Non-Patent Document 2), "Development of Super-Precision End Standard internally including vacuum laser interferometer (2nd edition) " prepared by Yokoyama and three other members, Collected Papers of Academic Lectures of Spring Meeting of 2001, The Japan Society for Precision Engineering: Non-Patent Document 3), and "Gap Sensor" ("Development of laser interferometer for the three surface method" prepared by Yanaka and three other members, Collected Papers of Academic Lectures of Autumn Meeting of 2005, The Japan Society for Precision Engineering: Non-Patent Document 4).

In Non-Patent Document 1, the above-described problems can be overcome by better utilizing the features of the special laser interferometer. That is, a detailed description of the special laser interferometer of FIG. 2 is given below.

A laser beam projected through a polarization-preserving fiber 16 from a laser light source (not illustrated) passes through a lens 17, and is made into parallel light 18 having two linearly polarized lights (P-polarized light and S-polarized light) orthogonal to each other, and is directed to the PBS 13. In the PBS 13, the P-polarized light parallel to the paper passes through the PBS 13 as it is, and is made into a reference beam of an interferometer.

On the other hand, the S-polarized light having an oscillation plane orthogonal to the paper is reflected by the PBS 13 and is made into a circularly polarized light after passing through a 1/4-waveplate 19. The focal point thereof is controlled so as to correspond to the center O of the reference sphere 14. Light 21 reflected by the surface of the reference sphere 14 is made into parallel light by the lens 20 again, and is made into a P-polarized light by passing through the 1/4-waveplate 19. And it passes through the PBS 13 and the 1/4-waveplate 22, and is directed to the measurement side reflection body 15 in a state of a circularly polarized light. As the light reflected by the measurement side reflector 15 passes through the 1/4-waveplate 22 again, it is turned into an S-polarized light this time, is reflected by the PBS 13, and is made into a measurement beam of the interferometer.

If the reference beam and measurement beam of the above-described interferometer pass through the polarizer 23 in an overlapped state, an interference beam 24 can be obtained. The interference beam 24 propagates in an optical fiber 25 as an interference beam signal, and a result of length measurement is output from the electric component apparatus (not illustrated).

In addition, in FIG. 2, the portion enclosed by the broken line indicates a tracking optical system 29 (consisting of a beam splitter 27 and a four-division optical detector 28) that detects an amount of error in regard to position of the interferometer main body 26 of the special laser interferometer and the measurement side reflector 15 and carries out tracking by means of a control device (not illustrated). However, the tracking optical system 29 is not directly related to the configuration of the special laser interferometer whose purpose is length measurement.

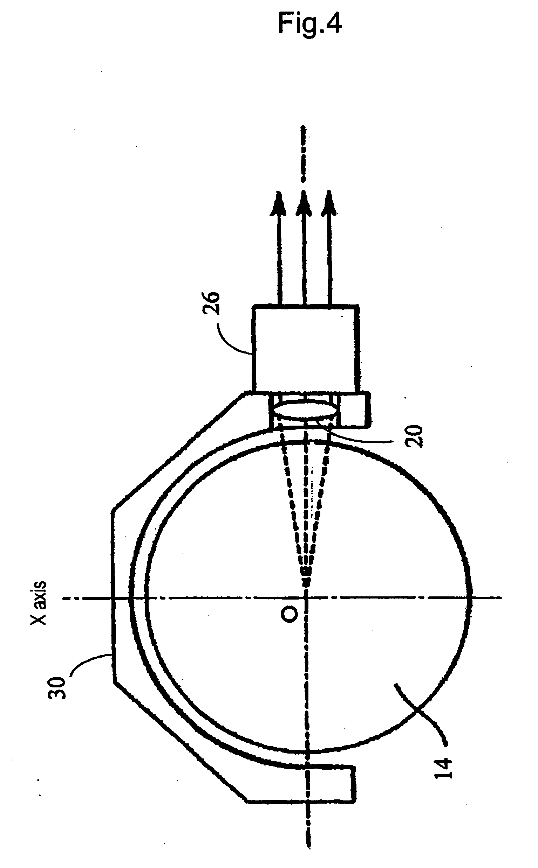

Other features that can be observed in Patent Document 2 and Non-Patent Document 1 are that, utilizing the features of the above-described special laser interferometer, as shown in FIG. 4, the interferometer main body 26 of the special laser interferometer and the lens 20 are fixed on the carriage 30, and while making coincident the focal point of the lens 20 with the center O of the reference sphere 14, the carriage 30 is turned around the reference sphere 14 with the X-axis used as the turning axis.

Thereby, highly precise length measurement is brought about while optically removing an error in turning movement with respect to the reference sphere 14 . In other words, in FIG. 2, the length L to be measured does not change even if L₁ changes, wherein highly precise length measurement can be brought about.

However, in a case where highly precise length measurement is intended by the above-described method, it is necessary that the turning accuracy of the carriage 30 turning around the spatially fixed reference sphere 14 is high to some degree. This is because, with the method in which the laser beam is narrowed by the lens 20 and the focal point is coincident with the center of the reference sphere 14, in practice, visibility fluctuations of the interference fringe remarkably appear in the interference beam 24 in some turning directions if the turning accuracy of the carriage 30 is poor. This becomes a cause of miscounting of the interference fringe when carrying out length measurement, which hinders length measurement of high reliability. If being roughly referred to, it is necessary to strictly design, assemble and adjust the carriage 30 so that the error in turning movement is controlled to be less than approximately 50µm when making an assumption based on the focal depth of the lens 20. Furthermore, according to the theoretical examination of the inventors, if the special laser interferometer causes a side shift in the direction orthogonal to the laser beam along the length measurement direction, the visibility of the interference fringe formed by the entire section of the laser beam due to changes in the optical path length is lowered. In this connection, where it is assumed that the special laser interferometer causes a lateral shift of 100µm in the direction orthogonal to the length measurement direction, the optical path length changes by approximately 20µm, wherein the visibility of the interference fringe is lowered to cause the Lissajous waveform of the interference fringe signal to be reduced. In a worst case, counting of the interference fringe will be disabled.

In order to solve the problem, the applicant proposed a tracking type laser interferometer in EP1750085A2 (Date of priority not laid open: Patent Document 4) . In the prior invention, in order to correct an error in turning movement of the carriage 30, which becomes an error in length measurement, with respect to the reference sphere 14, a displacement gauge 31, for example, an electrostatic capacity type non-contact gauge having a flat plate electrode, is separately provided.

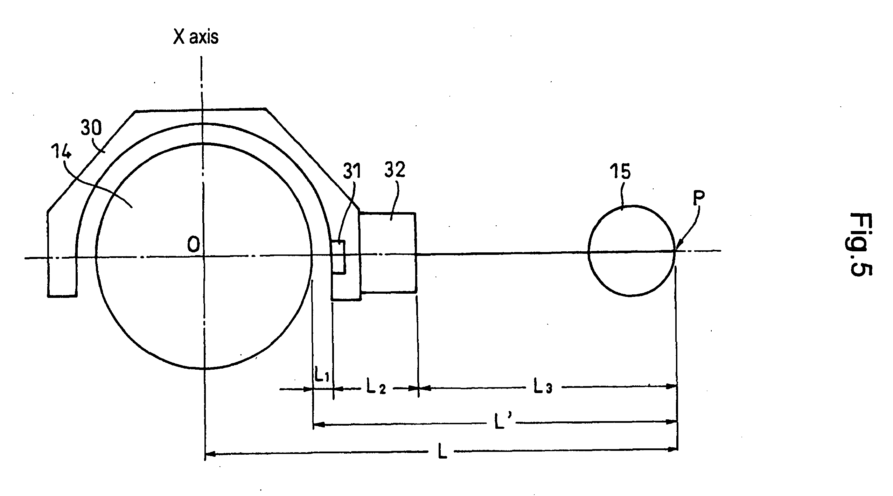

FIG. 5 is a view describing the base of the prior invention. The laser interferometer 32 used in FIG. 5 is not the above-described special laser interferometer, but a general Michelson interferometer of such a type which is available on the market.

According to the prior invention, measurement of the distance L from the center O of the reference sphere 14 to the point P of the measurement reflector 15 is the same as measurement of L' in FIG. 5. Although L' = L₁+L₂+L₃, if the gap L₁ between the carriage 30 and the reference sphere 14 changes by +ΔL, L₃ changes by -ΔL. That is, L1+ΔL is brought about by an error in turning movement of the carriage 30, L₃-ΔL is brought about, wherein both change in a relationship of push-pull. As a result, even if the carriage 30 is subjected to an error in turning movement, L', which is the length to be measured, = L₁+L₂+L₃ is not influenced at all. This is the feature of the prior invention.

Certainly, if a turning error of the carriage 30 to the reference sphere 14 is detected by a non-contact gauge and is corrected, a shift amount of the laser beam along the length measurement direction and restriction in regard to the horizontal shift in the direction orthogonal thereto are reduced in comparison with a case of FIG. 4 (Patent Document 2).

However, since the displacement gauge 31 is separately provided, the following practical problems newly occur. That is, (1) since an additional non-contact gauge is introduced, the apparatus becomes expensive, (2) since a non-contact gauge used is an analog type gauge, it is necessary that the analog data is converted to a digital amount to correct the length measurement value by the laser interferometer, (3) there arises a restriction in mechanical design since spacing to mount the non-contact gauge is to be secured, (4) if an electrostatic capacity gauge is used as the non-contact gauge, it has non-linear characteristics, and it is necessary to calibrate the same with a correct length amount, (5) taking into consideration the sensitivity characteristics of the electrostatic capacity type displacement gauge when assembling, it is necessary that the clearance L₁ between the flat plate electrode and the reference sphere 14 is adjusted to be 1mm or less, that is, it is necessary that the clearance L₁ is kept within the range of measurement capacity of the electrostatic capacity type displacement gauge, (6) for the adjustment, cumbersome adjustment is required, by which the position of the reference sphere 14 is aligned in advance by approximately 100µm in the direction of X/Y/Z with respect to the turning axis of the carriage 30, and it is necessary to incorporate a reference sphere micro-adjustment unit. Such various problems still remain.

Another tracking interferometer that is insensitive to small distance deviations of the interferometer body and the reference sphere is described in "LASERTRACER - A NEW TYPE OF SELF TRACKING LASER INTERFEROMETER" by C.-T. Schneider in Proceedings of the 8th International Workshop on Accelerator Alignment (2005).

The present invention was developed in order to solve the conventional problems, and it has an object to (1) mechanically remove and correct, without fail, a turning error of an arcuate movement mechanism mounted with the interferometer main body and so on, (2) reduce the burden and cost in mechanical design by removing a non-contact gauge which aims at correcting a turning error of the arcuate movement mechanism with respect to the reference sphere, and (3) remarkably reduce the burden in design, manufacture, assembling and adjustment by eliminating the restriction in accuracy, which is to keep the turning error of the arcuate movement mechanism within the performance range of the lens optical system and the electrostatic capacity type displacement gauge, when taking a permissible measurement length error into consideration.

The present invention solves the above-described problems by a method for measuring a length by laser interference tracking as defined by claim 1.

The present invention also solves the above-described problems by an apparatus for measuring a length by laser interference tracking as defined by claim 2.

The spacing between the reference sphere whose position is fixed and the arcuate movement mechanism for making arcuate movement of the interferometer main body around the center of the reference sphere is adjusted in order to cause the rectilinear guiding mechanism to be entered into a compressed state, wherein a shoe of the rectilinear guiding mechanism can always be kept in a contacted state with the surface of the reference sphere at all times.

In addition, it is possible to provide a rectilinear ball guiding mechanism having a rectilinearly displaceable ball bush structure and having compression spring components housed therein in order that an inside cylindrical housing having the reference side reflector accommodated therein and an outside cylinder are propped up by each other between the reference sphere and the interferometer main body.

Although the shoe of the above-described rectilinear ball guiding mechanism is geometrically brought into contact with the reference sphere at one point, a small fixing seat made of three small spheres that are equilateral-triangularly arranged, is prepared so that the inside cylindrical housing having the reference side reflector accommodated therein is not inclined further securely with respect to the interferometer main body, and the fixing seat is brought into contact with reference sphere, wherein the shoe can stably profile the surface of the reference sphere.

Furthermore, since the interferometer main body is fixed at the arcuate movement mechanism and the arcuate movement mechanism itself turns with the center of the reference sphere commonly used as the turning center thereof, it becomes possible to carry out laser tracking length measurement of a measurement side reflector as a target by a tracking unit.

Still furthermore, it is possible that the arcuate movement mechanism has two turning mechanisms the azimuth angle and elevation angle which are independent from each other, the interferometer main body is mounted in an elevation angle turning mechanism, and the corresponding elevation angle turning mechanism is mounted in the azimuth angle turning mechanism.

Also, it is possible that the arcuate movement mechanism the center of which is common to the center of the reference sphere is fixed, and the interferometer main body runs along therewith and enables arcuate movement.

In addition, it is possible that the above-described arcuate movement mechanism includes a first elevation angle turning mechanism that turns a circular frame around the horizontal axis centering around the reference sphere and a second elevation angle turning mechanism that turns the interferometer main body while causing the same to run along the circular frame.

Furthermore, the arcuate movement mechanism may include an azimuth angle turning mechanism for turning the circular frame around the vertical axis centering around the reference sphere and an elevation angle turning mechanism for turning the interferometer main body while causing the same to travel along the circular frame.

And, two bearing mechanisms consisting of an outer ring and an inner ring may be used as a mechanism for giving an elevation angle of the arcuate movement mechanism.

According to the present invention, since such a method is employed in which a part forming the special laser interferometer is made into a contact system with respect to the reference sphere while ultimately utilizing the features of the above-described special laser interferometer, the accuracy and reliability can be improved in regard to length measurement by laser interference tracking. That is,
(1) it is possible to mechanically remove and correct, without fail, a turning error of the arcuate movement mechanism with an interferometer main body mounted, etc., by extension and contraction of, for example, a rectilinear guiding mechanism, also, (2) burden and cost in mechanical design can be relieved by removing a lens optical system (Patent Document 2, and Non-Patent Document 1), which is a non-contact gauge aiming at correction of a turning error of the arcuate movement mechanism in regard to the reference sphere and an electrostatic capacity type displacement gauge (Prior Invention), further (3) it is possible to remarkably relieve the burden and load in design, manufacture, assembling, and adjustment by eliminating the restriction in accuracy, for which it is necessary that the turning error of the arcuate movement mechanism is kept within the range of performance of the lens optical system and the electrostatic capacity type displacement gauge with permissible measurement length error taken into consideration.

These and other novel features and advantages of the present invention will become apparent from the following detailed description of preferred embodiments.

The preferred embodiments will be described with reference to the drawings, wherein like elements have been denoted throughout the figures with like reference numerals, and wherein;
FIG. 1 is a sectional view showing a configuration of an optical system of a tracking type laser interferometer described in Patent Document 1;
FIG. 2 is an optical path diagram showing a configuration of an optical system of a special laser interferometer described in Patent Document 2;
FIG. 3 is a sectional view showing an example of a measurement side ref lector described in Patent Document 3;
FIG. 4 is a sectional view showing a configuration of the major parts of the special laser interferometer described in Patent Document 2 and Non-Patent Document 1;
FIG. 5 is a sectional view showing a configuration of the major parts of a tracking type laser interferometer proposed by the applicant in Patent Document 4;
FIG. 6 is a sectional view showing a basic embodiment of the present invention;
FIG. 7 is an enlarged sectional view showing a rectilinear ball guiding mechanism portion of FIG. 6;
FIG. 8 is a front view showing a configuration of Embodiment 1 of the present invention;
FIG. 9 is a plan view of Embodiment 1;
FIG. 10 is a front view showing a configuration of Embodiment 2 of the present invention;
FIG. 11 is a plan view of Embodiment 2;
FIG. 12 is a perspective view showing a configuration of Embodiment 3 of the present invention;
FIG. 13 is a front view showing a configuration of Embodiment 4 of the present invention;
FIG. 14 is a sectional view taken along the line A-A' of FIG. 13; and
FIG. 15 is a plan view of Embodiment 4.

Hereinafter, with reference to the drawings, a detailed description is given of embodiments of the present invention.

First, a description is given of the principle of a reference sphere contact type laser tracking method for measuring length according to the present invention, based on an embodiment shown in FIG. 6.

In FIG. 6, a parallel beam 18 having two linear polarized lights (P-polarized light and S-polarized light) is made incident into PBS 13. In the PBS 13, the P-polarized light parallel to the paper passes through the PBS 13 and a polarizer 23 as it is and is made into a reference beam of an interferometer.

On the other hand, the S-polarized light having an oscillation plane orthogonal to the paper is reflected by the PBS 13 and is made into circularly polarized light by passing through a 1/4-waveplate 22, and is directed to a measurement side reflector (for example, a hemispherical retroreflector of FIG. 3) 15 as a target. As the beam reflected by the measurement side reflector 15 passes through the 1/4-waveplate 22 again, it is made into the P-polarized light this time, and is made incident into a reference side reflector (for example, a right angle three-sided mirror and a corner cube prism) 33 in a state of circularly polarized light after passing through the PBS 13 and the 1/4-waveplate 19. As a laser beam reflected by the reference side reflector 33 passes through the 1/4-waveplate 19 again, it is made into the S-polarized light this time, is made into the PBS 13 and is reflected by the reflection surface of the beam splitter. Then, it is made into a measurement beam of the interferometer after passing through the polarizer 23. The measurement beam overlaps the prior reference beam and is made into an interference beam 24. The interference beam 24 is turned into an interference beam signal, propagates through an optical fiber 25 shown in, for example, FIG. 2, and is output as length measurement results from the electric-component apparatus (not illustrated).

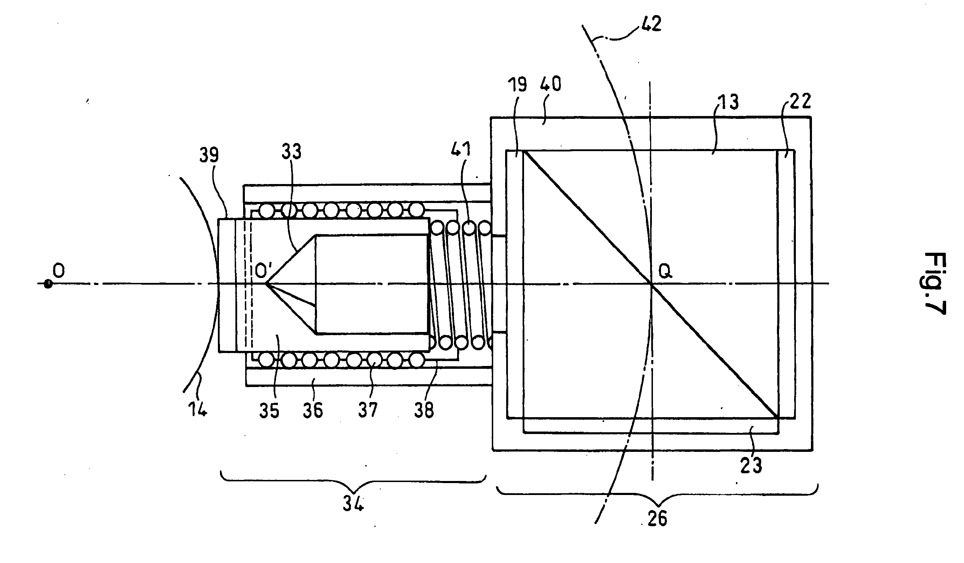

According to the measurement method of the present invention, such a structure can be brought about, which mechanically remove, without fail, a turning error with respect to the reference sphere 14 of the special laser interferometer at all times, which became problematic in Patent Document 2, Non-Patent Document 1 and the prior invention, and is able to highly accurately measure the length. That is, in FIG. 6, the interferometer main body 26 and the lens 20, which compose the special laser interferometer, are not integral as shown in FIG. 4, wherein these are connected by a rectilinear ball guiding mechanism 34 shown in enlargement in FIG. 7 so that the reference side reflector 33 is separated from the interferometer main body 26, and the distance therebetween is freely variable. Therefore, the special laser interferometer referred to in the present invention indicates a portion mainly consisting of three points which are the interferometer main body 26, rectilinear ball guiding mechanism (a rectilinear guiding mechanism other than a ball maybe available) 34 having the reference side reflector 33 housed therein, and the measurement side reflector 15.

The rectilinear ball guiding mechanism 34 of FIG. 7 forms a structure of a ball bush in which steel balls 37 are arranged in an arbitrary cylindrical shape between the inside cylindrical housing 35 and the outside cylinder 36, are supported by a retainer 38 and are nipped in the retainer 38 and both thereof rectilinearly move smoothly only in the cylindrical axis direction, that is, the measurement beam direction. A reference side reflector 33 is housed in the inside cylindrical housing 35, a shoe 39 at one end thereof is brought into contact with the reference sphere 14, and one end of the outside cylinder 36 is firmly fixed at the housing 40 of the interferometer main body 26. A compression coil 41 is inserted between the inside cylindrical housing 35 and the housing 40, and such a state is produced where both are propped up by each other with a constant force. How the compression coil spring 41 is compressed and at which force the shoe 39 is pressed to the reference sphere 14 are determined by setting the spring constant and the distance from the point O in FIG. 6 to the point Q of the PBS 13 when designing.

Thus, highly accurate measurement can be carried out while bringing the shoe 39 of the inside cylindrical housing 35 into contact with the surface of the reference sphere 14 with a constant force. That is, laser interference measurement of length can be carried out by such a system in which the shoe 39 is caused to be profiled on the surface of the reference sphere 14 while being pressed to the surface of the reference sphere 14 with a constant force at all times and being brought into contact therewith.

In the optical system according to the present invention, which is shown in FIG. 6, if a tracking optical system 29 in FIG. 2 is inserted in a measurement beam between the interferometer main body 26 and the measurement side reflector 15 and the signal is controlled, tracking length measurement can be carried out. When carrying out tracking length measurement, the interferometermain body 26 (PBS 13, 1/4-waveplate 19, 22 and polarizer 23) forming the special laser interferometer of FIG. 6 and the rectilinear ball guiding mechanism 34 are integrated and turns around the Y-axis (center O) along the locus 42 of movement of the arcuate movement mechanism (not illustrated) . Furthermore, by turning the same around the X-axis, tracking length measurement can be carried out even if the measurement side reflector 15 moves to any place in the space.

A turning error included in the locus 42 of movement of the arcuate movement mechanism and the eccentric amount with respect to the reference sphere 14 are absorbed at all times by extension and contraction of the rectilinear ball guiding mechanism 34 in the direction of the measurement beam, wherein length measurement of high reliability can be carried out in regard to the measurement side reflector 15. In other words, in FIG. 6, measurement of distance L from point O of the reference sphere 14 to point P of the measurement side reflector 15 is equivalent to measurement of L' = L₁+L₂ from point O' of the reference side reflector 33 to point P of the measurement side reflector 15. This is because the shoe 39 of the inside cylindrical housing 35 is brought into contact with the surface of the reference sphere 14 with a constant force at all times and is profiling the surface thereof. Even if the distance L₁ (or L₂) minutely changes due to the turning error included in the locus 42 of movement and the eccentric amount in regard to the reference sphere 14, no influence is given to the total length measurement of L₁+L₂ =L' by virtue of the features of the special laser interferometer.

Effects of the embodiment shown in FIG. 6 are as follows;
(1) An error in turning movement of the interferometer main body 26 in regard to the reference sphere 14 can be mechanically and directly removed by extension and contraction of the rectilinear ball guiding mechanism 34 and can be corrected in real time, and the distance from the reference sphere 14 to one point in space can be measured at high reliability.
(2) Restriction in the turning accuracy of the arcuate movement mechanism mounted with the interferometer main body 26 in regard to the reference sphere 14 is remarkably relieved by extension and contraction of the rectilinear ball guiding mechanism 34, wherein cumbersome adjustment to improve the turning accuracy is not substantially required. If the arcuate movement mechanism is finished and assembled with general mechanical accuracy, it is possible to sufficiently achieve the turning accuracy of 100µm or less. Even if the turning accuracy should be several hundreds of micrometers, the turning error can be sufficiently absorbed by mechanical extension and contraction of the rectilinear ball guiding mechanism.
(3) The above-described effects remarkably facilitate design, assembling and adjustment of the arcuate movement mechanism in regard to the reference sphere 14, and an economical apparatus can be brought about. Furthermore, highly efficient productivity can be achieved when being brought into production.
(4) There is a concern about abrasion of the shoe 39 integrated with the inside cylindrical housing 35 having the reference side reflector 33 housed therein due to contact. However, the total mass of the reference side reflector 33, inside cylindrical housing 35 and shoe 39, whichprofile the surface of the reference sphere 14, is small, and the profiling speed is slow to be 10mm per second at most in practice. In comparison with the value by which the sphericity (size of deviation from the complete sphere) inherent to the reference sphere is corrected, the value of abrasion amount per time of measurement is only slight, and it can be ignored.
(5) There is a concern about inclination of the inside cylindrical housing 35 in regard to the interferometer main body 26. However, in this case, the reference sphere 14 and the shoe 39 are not brought into contact with each other at one point, but three small spheres are equilaterally arranged (not illustrated) and fixed on the surface of the shoe 39, and are brought into contact with the surface of the reference sphere, whereby it is possible to prevent the inside cylindrical housing 35 from being inclined.

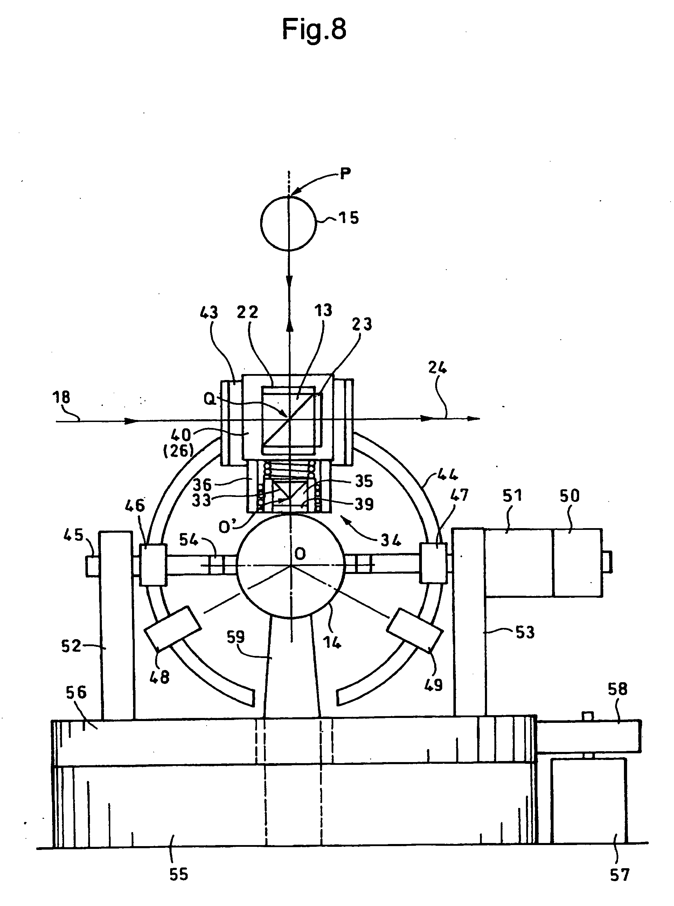

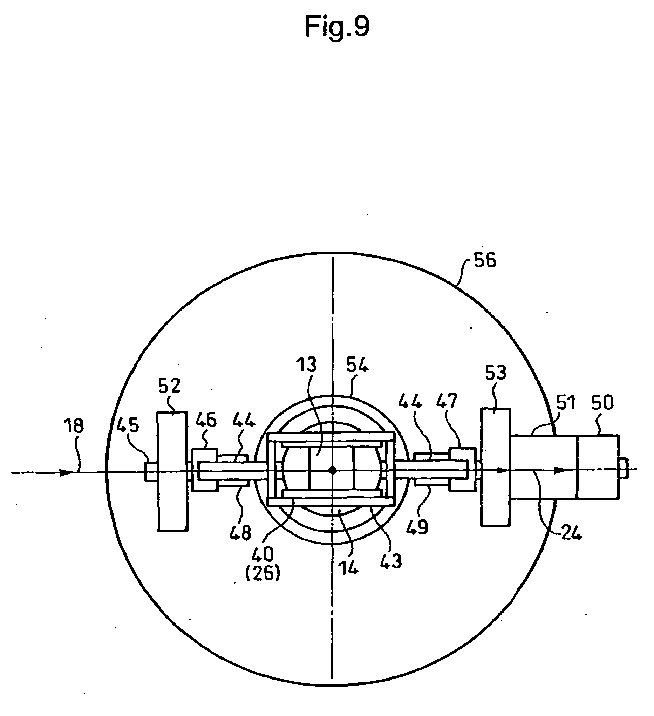

Embodiment 1 shown in FIG. 8 (front view) and FIG. 9 (plan view) is an example showing a laser interference tracking length measurement mechanism inwhich two turningmechanisms whose azimuth angle and elevation angle are independent from each other are provided, a special laser interferometer of the reference sphere contact type according to the present invention, which is shown in FIG. 6, is mounted in the elevation angle turning mechanism and is made integral with the azimuth angle turning mechanism.

The elevation angle turning mechanism according to Embodiment 1 is mainly composed of an interferometer main body 26 of FIG. 6, and includes joints 46 and 47 by which the housing 40 and frame 43, and the circular frame 44 and elevation angle turning axis 45 are coupled to each other, balance weights 48 and 49 attached to the circular frame 44 for the purpose of counterbalancing the moment between the interferometer main body 26 and the rectilinear ball guiding mechanism 34, a motor 50 and reduction gears 51 to rotate an elevation angle turning axis 45, plates 52 and 53 to support the elevation angle turning axis 45 by means of bearing, and a ring 54 to couple two-divided elevation angle turning axes 45 together with the reference sphere 14 avoided.

On the other hand, the azimuth angle turning mechanism is composed of a fixing table 55, a turning table 56 placed thereon, a motor 57 and a wheel 58 to rotate the turning table, etc. A set of the elevation angle turning mechanism is mounted on the turning table 56.

The reference sphere 14 and a support 59 to fix the reference sphere 14 are firmly fixed on the fixing table 55. In a laser interference tracking length measurement mechanism according to Embodiment 1, the interferometer main body 26 is fixed with the housing 40 and the frame 43. The frame 43 is fixed on the circular frame 44. Therefore, high torque is obtained by transmitting rotations of the motor 50 to the reduction gears 51, wherein high turning forces are given to the elevation angle turning axis 45 coupled by means of the circular frame 44 and joints 46 and 47. The balance weights 48 and 49 are symmetrically attached to appropriate positions of the circular frame 44 in order to acquire the mass and moment balance of the entire special laser interferometer.

In Embodiment 1, the total mass of two balance weights is determined so that the moment based on the total mass of the special laser interferometer in regard to the elevation angle turning axis 45 and the moment based on the balance weights 48 and 49 disposed at positions respectively forming 120° are counterbalanced.

Since the special laser interferometer is fixed on the circular frame 44, a change in elevation angle is given to the special laser interferometer by driving the motor 50, and the turning table 56 is turned by drive of the motor 57 to give an azimuth angle.

As a result, by controlling the position of reflection light from the measurement side reflector 15 with a tracking optical system 29 (Refer to FIG. 2 and FIG. 6) inserted between the special laser interferometer and the measurement side reflector 15, tracking length measurement can be carried out while the measurement side reflector 15 is moving to an arbitrary position in space.

A feature of the special laser interferometer shown in FIG. 6 is that even if point Q of the PBS 13 is moved in the direction of the measurement beam, no influence is given to length measurement to point P of the measurement side reflector 15, which is a target.

In addition to the above-described feature, even if point Q of the PBS 13 is moved to the direction orthogonal to the measurement beam, no change appears in the length of L₁ in FIG. 6 (the sensitivity of the interferometer is zero). That is, if a right angle three-sided mirror in which three sides are crossed orthogonally to each other is used as the reference side reflector 33, no influence is given to the length of L, that is, L' unless the corner point O' shifts in the direction of the measurement beam. This is the same in principle as in the case of using a corner cube prism for the reference side reflector 33. That is, although, in the case of a right angle three-sided mirror, the top of the geometrical three-sided right angle corresponds to the corner point, in the case of the corner cube prism, the virtual corner point is located at a forward position from the geometrical top of the three-sided right angle based on the refractive index. Therefore, the position of O' of FIG. 6 slightly shifts rightward equivalent to influences of the refractive index. However, even if the right angle three-sided mirror is used or even if the corner cube prism is used, it is equivalent in principle to that point O of the center of the reference sphere shifts to point O' (or a slightly rightward shifted position), wherein there is no difference in principle.

Resultingly, even if point Q slightly shifts in any direction of X/Y/Z, the distance L' to be measured is not changed. A description is given of effects of Embodiment 1 based on the feature.

Now, even if the turning table 56 is made eccentric by several hundreds of micrometers with respect to the center O of the reference sphere 14 of FIG. 8, the corner point O' makes only a lateral shift and does not move in the direction of the measurement beam. Therefore, the length to the measurement side reflector 15 is not influenced at all.

Next, evenif, in the elevation angle turning mechanism, the interferometer main body 26 (Refer to FIG. 6) attached to the circular frame 44 slightly changes by several hundreds of micrometers in regard to the distance (L₁ shown in FIG. 6) from the corner point O' to Point Q of the PBS 13 due to a run out of the elevation angle turning axis 45 and a shift in the horizontal level from the center O of the reference sphere 14, the rectilinear ball guiding mechanism 34 is only subjected to extension and contraction, and no change is caused in regard to the distance from the corner point O' to point P of the measurement side reflector 15 based on the feature of the special laser interferometer. Therefore, highly accurate length measurement can be achieved by the laser interference tracking length measurement mechanism according to Embodiment 1.

In the case of the structure of Embodiment 1, the angular range for tracking the measurement side reflector 15 as the laser interferometer tracking length measurement mechanism is the entire range which is 360° for the azimuth angle direction and is approximately 90° or approximately 135° for the elevation angle. That is, if the ring 54 is made semi-circular, and both sides of the elevation angle turning axis 45 are coupled to each other, the angular range becomes approximately 135°.

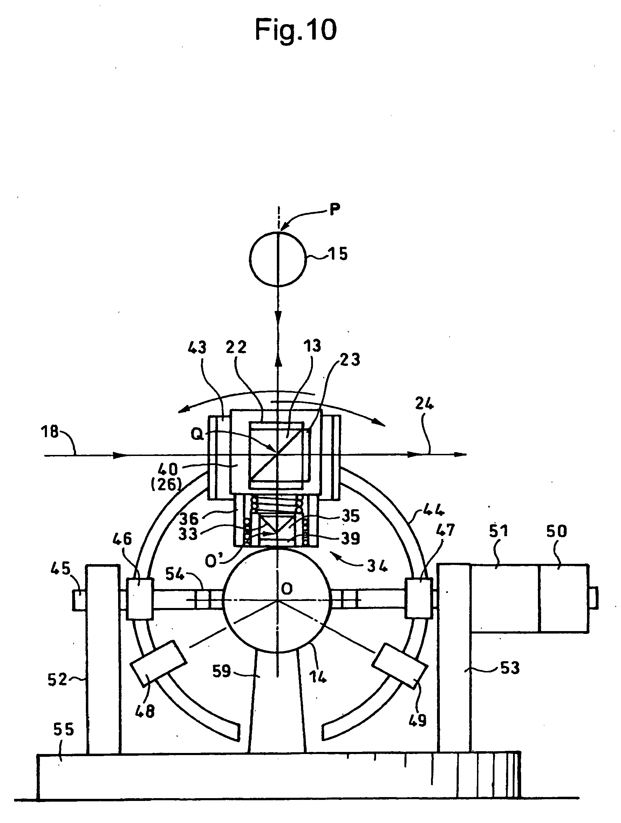

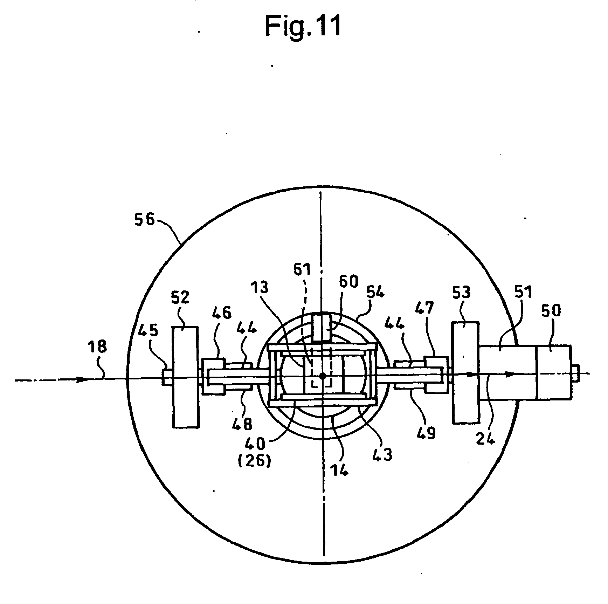

Embodiment 2 shown in FIG. 10 (front view) and FIG. 11 (plan view) is an embodiment showing a laser interference tracking length measurement mechanism to give so-called two types of elevation angles, differing from Embodiment 1. Embodiment 2 aims at effects such as securing of stability of the position of the reference sphere 14 by making the height thereof lower than that in Embodiment 1 and shortening the support 59 by which the reference sphere 14 is fixed, equivalent to the thickness of the turning table 56, and compaction by making the entirety small, etc.

The elevation angle turning mechanism described in Embodiment 1 may be named as the first elevation angle turning mechanism. On the other hand, the mechanism by which the special laser interferometer turns while running around the reference sphere 14 along the circular frame 44 may be named as the second elevation angle turning mechanism.

Embodiment 2 is configured so that, instead of the turning table to determine the azimuth angle, the second elevation angle turning mechanism is provided. That is, in the second elevation angle turning mechanism, the special laser interferometer housed in the frame 43 functions so as to run left and right by guiding of the circular frame 44.

A small-sized motor 60 is mounted in the frame 43, and a small-sized wheel 61 coupled therewith is installed so that the special laser interferometer is caused to run left and right along the circular frame 44. The small-sized wheel 61 causes the special laser interferometer to smoothly move while turning in contact with the circular frame 44 along the same.

As a result, as in Embodiment 1, by inserting a tracking optical system 29 (Refer to FIG. 2 and FIG. 6) between the special laser interferometer and the measurement side reflector 15, and controlling the position of reflection light from the measurement side reflector 15, tracking length measurement is enabled even if the measurement side reflector 15 moves to an arbitrary position in space.

In the case of the structure of Embodiment 2, the angular range capable of tracking the measurement side reflector 15 as the laser interference tracking length measurement mechanism is approximately 90° or approximately 135° for the first elevation angle turning mechanism, and approximately 120° for the second elevation angle turning mechanism.

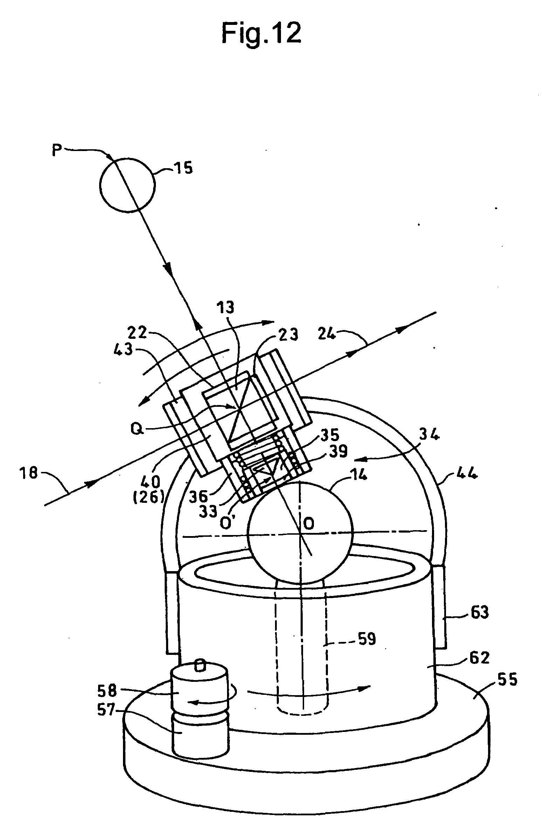

Embodiment 3 shown in FIG. 12 is an embodiment showing a laser interference tracking length measurement mechanism in which the azimuth angle turning mechanism according to Embodiment 1 and the second elevation angle turning mechanism according to Embodiment 2 are coupled to each other and integrated, and the mechanisms of Embodiment 1 and Embodiment 2 are eclectically combined.

The reference sphere 14 and a support 59 to fix the same are firmly fixed on the fixing table 55. On the other hand, the circular frame 44 is firmly fixed by the cylindrical turning table 62 and a fixing component 63.

The wheel 58 of the motor 57 mounted on the fixing table 55 rotates the cylindrical turning table 62 and determines the azimuth of the special laser interferometer located on the circular frame 44. A small-sized wheel 61 (located on the rear side of FIG. 12 and not illustrated) coupled to the small-sized motor 60 (located on the rear side of FIG. 12 and not illustrated) is mounted on the frame 43, so that the special laser interferometer is caused to move along the circular frame 44. The small-sized wheel 61 causes the special laser interferometer to move while turning in contact with the circular frame 44.

As a result, as in Embodiment 1, by inserting a tracking optical system 29 between the special laser interferometer and the measurement side reflector 15 and controlling the position of reflection light from the measurement side reflector 15, it is possible to carry out tracking length measurement while the measurement side reflector 15 is moving to an arbitrary position in space.

In the case of Embodiment 3, as in the elevation angle turning mechanism used in Embodiment 1 and Embodiment 2, such a feature can be displayed, which does not require any balance weights 48 and 49 for the purpose of balancing the moment with the special laser interferometer. That is, both ends of the circular frame 44 on which the special laser interferometer run are firmly fixed by the cylindrical turning table 62 to determine the azimuth angle and a fixing component 63. On the other hand, since, with the feature to determine the azimuth in the horizontal plane, the cylindrical turning table 62 is turned by the wheel 58 of the motor 57 mounted on the fixing table 55, the balance weights 48 and 49 are not required anymore.

Also, with the structure according to Embodiment 3, where the measurement side reflector 15 is tracked as the laser interference tracking length measurement mechanism, such an advantage can be displayed, by which the angular range of tracking in the azimuth angle direction can cover the entire range of 360°, and the angular range of tracking in the elevation angle direction can cover approximately 180°.

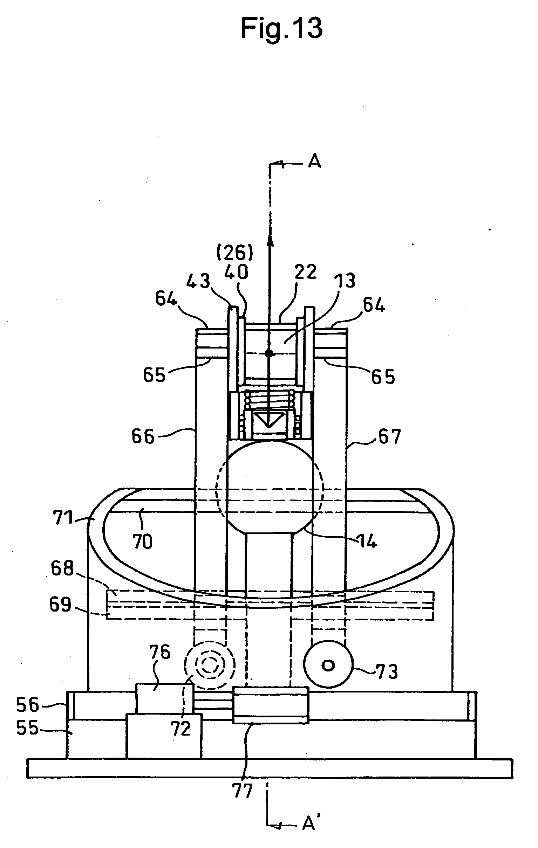

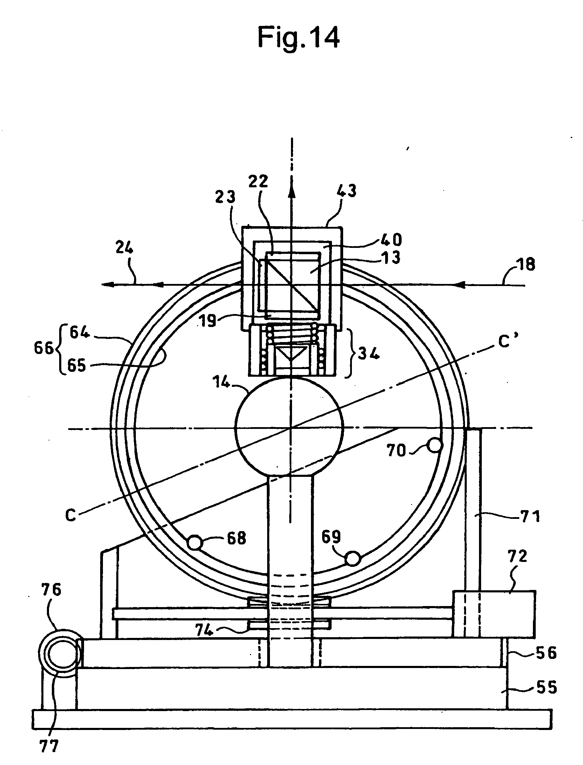

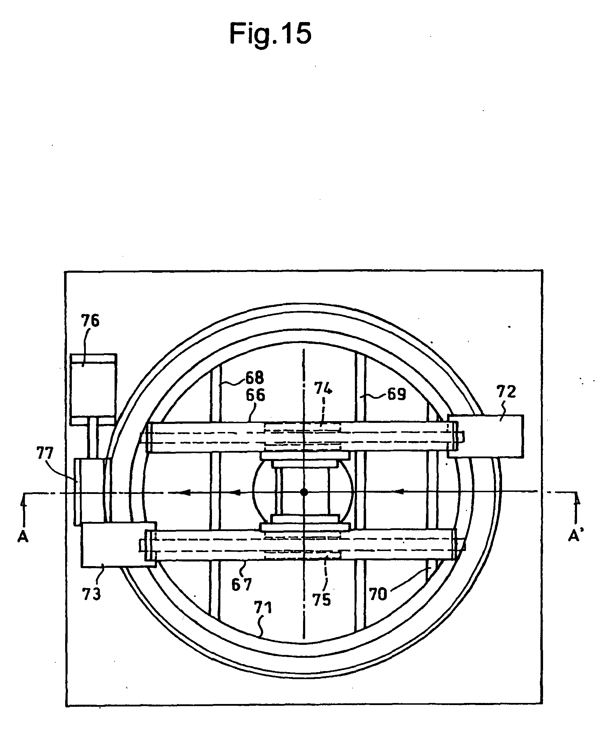

FIG. 13 is a front view of Embodiment 4, and FIG. 14 is a sectional view taken along the line A-A' of the front view of FIG. 13. Also, FIG. 15 is a plan view of the same Embodiment 4.

Afeatureof Embodiment 4 is that twobearingmechanisms 66 and 67 consisting of an outer ring 64 and an inner ring 65 are used as a mechanism for applying the elevation angle, wherein the outer ring 64 is made rotatable while the inner ring 65 is fixed. By mounting the interferometer main body 26 consisting of a PBS 13, 1/4-waveplate 19 and 22, a polarizer 23 and a housing 40 on the outer ring 64, a free elevation angle can be set. The interferometer main body 26 is fixed by the frame 43 so as to be nipped by the outer rings 64 of the bearing mechanisms 66 and 67.

On the other hand, the inner rings 65 of the bearing mechanisms 66 and 67 are firmly fixed by fixing rods 68, 69 and 70 so that rotation of the outer rings 64 to give an elevation angle is not hindered. At the same time, the fixing rods are fixed in a notched cylinder 71 to give the azimuth angle. Therefore, when attempting to set the azimuth angle, all of the interferometer main body 26 and the bearing mechanisms 66 and 67 can be turned in the horizontal plane.

In addition, two sets of mechanisms consisting of a worm and a worm wheel are employed to give an elevation angle to the interferometer main body 26. That is, worms 74 and 75 are rotated by two motors 72 and 73. Gears threaded on the respective outer rings 64 of the bearing mechanisms 66 and 67 function as the worm wheels engaged therewith.

The azimuth angle by rotation in the horizontal plane is also given by a mechanism of a worm and a worm wheel. That is, the worm 77 is rotated by the motor 76, the notched cylinder 71 is fixed, and the turning table 56 the outer periphery of which is threaded functions as the worm wheel.

The following features can be displayed by the mechanism according to Embodiment 4. That is, the balance weights 48 and 49 are not required, in which the balance of moment with the interferometer main body 26 as in Embodiments 1 and 2 is taken into consideration. In addition, as in Embodiments 2 and 3, since the interferometer main body 26 is not caused to run while making arcuate movements, an error in length measurement, which is based on sway and slight turning of the interferometer main body 26 during running when carrying out length measurement, is not taken in. Furthermore, it is possible to devise to widen the setting range of the elevation angle by cutting off the notched cylinder 71 in a diagonal direction of the line C-C' shown in FIG. 14. In this connection, it is possible to cover the entire range of 360° as the tracking range in the azimuth angle direction and 180° or more as the tracking range in the elevation angle direction.

Also, since Embodiment 4 is structured so as to make the mechanism lighter in weight as the whole, it is sufficient that the motor capacity is small, wherein Embodiment 4 is optimal in view of making the entirety small and compact.

Furthermore, in any one of the above-described embodiments, the rectilinear guiding mechanism 34 is not limited to such types in which a ball and a compression coil spring are employed.

## Claims

1. A method for measuring a length by laser interference tracking, which employs:
a reference sphere (14) made into a measurement reference,
a measurement side reflector (15) disposed at an object to be measured,
a laser interferometer (32) for outputting a measurement value in compliance with an increase and a decrease in the distance to the corresponding measurement side reflector (15), and
an arcuate movement mechanism for turning an emission beam from the corresponding laser interferometer (32) centering around the reference sphere (14); and
the method being adapted for measuring the distance to the measurement side reflector (15) in which the optical axes of an emission beam from the laser interferometer (32) placed on the arcuate movement mechanism and a return beam thereto become parallel to each other by referencing the center coordinates of the reference sphere (14);
**characterized in that**
a reference side reflector (33) is provided, which is separated from the main body portion (26) of the laser interferometer (32), the reference side reflector is brought into contact with the reference sphere (14), and is devised so as to be displaced in the direction of the measurement beam while staying in contact with the surface of the reference sphere (14) at all times while carrying out the measurement, and
distance from the reference side reflector (33) to the measurement side reflector (15) is measured.

2. An apparatus for measuring a length by laser interference tracking, which includes:
a reference sphere (14) made into a measurement reference,
a measurement side reflector (15) disposable at an object to be measured,
a laser interferometer (32) for outputting a measurement value in compliance with an increase and a decrease in the distance to the corresponding measurement side reflector (15), and
an arcuate movement mechanism for turning an emission beam from the corresponding laser interferometer (32) centering around the reference sphere (14); and
the apparatus being adapted for measuring the distance to the measurement side reflector (15) in which the optical axes of an emission beam from the laser interferometer (32) placed on the arcuate movement mechanism and a return beam thereto become parallel to each other by referencing the center coordinates of the reference sphere (14);
**characterized in that** the apparatus further comprises
a reference side reflector (33) separated from the main body portion (26) of the laser interferometer (32), and
an extendable rectilinear guiding mechanism (34) in which the corresponding reference side reflector (33) and the interferometer main body portion (26) are coupled to each other, the reference side reflector (33) being in contact with the reference sphere (14), and being displaceable in the direction of the measurement beam while staying in contact with reference sphere (14) at all times while carrying out the measurement, and
the apparatus being configured such that the distance from the reference side reflector (33) to the measurement side reflector (15) is measured.

3. The apparatus for measuring a length by laser interference tracking according to Claim 2, being configured such that, in order to bring the rectilinear guiding mechanism (34) into a compressed state, the interval between the reference sphere (14) whose position is fixed and the arcuate movement mechanism for making arcuate movement of the interferometer main body around the center of the reference sphere (14) is adjusted, and a shoe (39) of the rectilinear movement mechanism thereby keeps contact with the surface of the reference sphere (14) with an appropriate force.

4. The apparatus for measuring a length by laser interference tracking according to Claim 2, wherein the extendable rectilinear guiding mechanism is a rectilinear ball guiding mechanism (34) having a ball bush structure that is rectilinearly displaceable and having a compression spring component (41) internally housed therein so that an inside cylindrical housing (35) having the reference side reflector (33) housed therein and an outside cylinder (36) are propped up by each other between the reference sphere (14) and the interferometer main body (26).

5. The apparatus for measuring a length by laser interference tracking according to Claim 4, wherein, although the shoe (39) of the rectilinear ball guiding mechanism (34) is configured to be geometrically one-point contact with the reference sphere (14), a small fixing seat consisting of three small spheres of equilateral triangular arrangement is prepared on the shoe (39) so that the inside cylindrical housing (35) having the reference side reflector (33) accommodated therein is configured not to further securely be inlined with respect to the interferometer main body (26), the fixing seat is configured to be brought into contact with the reference sphere (14) and to stably stay in contact with the surface of the reference sphere (14) at all times while carrying out the measurement.

6. The apparatus for measuring a length by laser interference tracking according to Claim 2, wherein the interferometer main body (26) is fixed on the arcuate movement mechanism, the arcuate movement mechanism itself is devised so as to turn with the center thereof commonly used as the center of the reference sphere (14), and the laser interferometer as part of a tracking unit is configured to measure the distance to the measurement side reflector (15) as a target.

7. The apparatus for measuring a length by laser interference tracking according to Claim 2, wherein the arcuate movement mechanism, having its center commonly used as the center of the reference sphere (14), is fixed, and the interferometer main body (26) is configured to make arcuate movement while running along the arcuate movement mechanism.

8. The apparatus for measuring a length by laser interference tracking according to Claim 2, wherein the arcuate movement mechanism has two turning mechanisms in which the azimuth angle and elevation angle are independent from each other, the interferometer main body (26) is mounted in the elevation angle turning mechanism, and the elevation angle turning mechanism is mounted in the azimuth turning mechanism.

9. The apparatus for measuring a length by laser interference tracking according to Claim 2, wherein the arcuate movement mechanism includes a first elevation angle turning mechanism for turning a circular frame around the horizontal axis centering around the reference sphere and a second elevation angle turning mechanism for turning the interferometer main body (26) while running the same along the circular frame.

10. The apparatus for measuring a length by laser interference tracking according to Claim 2, wherein the arcuate movement mechanism includes an azimuth angle turning mechanism for turning the circular frame (44) around the vertical axis centering around the reference sphere (14), and an elevation angle turning mechanism for turning the interferometer main body (26) while running the same along the circular frame (44).

11. The apparatus for measuring a length by laser interference tracking according to Claim 2, including two bearing mechanisms (66, 67) consisting of an outer ring (64) and an inner ring (65) as a mechanism to give an elevation angle of the arcuate movement mechanism.

## Patentansprüche

1. Verfahren zum Messen einer Länge durch Laserinterferenznachführung, das Folgendes verwendet:
eine Referenzkugel (14), die zu einer Messreferenz gemacht wird,
einen Messseitenreflektor (15), der an einem zu messenden Objekt angeordnet ist,
ein Laserinterferometer (32) zum Ausgeben eines Messwertes entsprechend eines Anwachsens oder einer Verringerung des Abstandes zu dem entsprechenden Messseitenreflektor (15), und
einen Mechanismus zum bogenförmigen Bewegen, um einen Emissionsstrahl von dem entsprechenden Laserinterferometer (32) zentriert um die Referenzkugel (14) zu drehen; und
wobei das Verfahren ausgelegt ist, den Abstand zu dem Messseitenreflektor (15) zu messen, in dem die optischen Achsen eines Emissionsstrahls von dem Laserinterferometer (32), der auf dem Mechanismus zum bogenförmigen Bewegen platziert ist, und eines zurückkehrenden Strahls durch Referenzierung der Zentrumskoordinaten der Referenzkugel (14) zu einander parallel werden;
**dadurch gekennzeichnet, dass**
ein Referenzseitenreflektor (33) bereitgestellt wird, der von dem Hauptkörperbereich (26) des Laserinterferometers (32) getrennt ist, wobei der Referenzseitenreflektor in Kontakt mit der Referenzkugel (14) gebracht wird, und der so konstruiert ist, dass er in Richtung des Messstrahls verschoben wird, während er zu jeder Zeit in Kontakt mit der Oberfläche der Referenzkugel (14) steht, während die Messung ausgeführt wird, und
der Abstand von dem Referenzseitenreflektor (33) zum Messseitenreflektor (15) gemessen wird.

2. Vorrichtung zum Messen einer Länge durch Laserinterferenznachführung, die einschließt:
eine Referenzkugel (14), die zu einer Messreferenz gemacht wird,
einen Messseitenreflektor (15), der an einem zu messenden Objekt angeordnet werden kann,
ein Laserinterferometer (32) zum Ausgeben eines Messwertes entsprechend eines Anwachsens oder einer Verringerung des Abstandes zu dem entsprechenden Messseitenreflektor (15), und
einen Mechanismus zum bogenförmigen Bewegen, um einen Emissionsstrahl von dem entsprechenden Laserinterferometer (32) zentriert um die Referenzkugel (14) zu drehen; und
wobei die Vorrichtung ausgelegt ist, den Abstand zu dem Messseitenreflektor (15) zu messen, in dem die optischen Achsen eines Emissionsstrahls von dem Laserinterferometer (32), der auf dem Mechanismus zum bogenförmigen Bewegen platziert ist, und eines zurückkehrenden Strahls durch Referenzierung der Zentrumskoordinaten der Referenzkugel (14) zu einander parallel werden;
**dadurch gekennzeichnet, dass** die Vorrichtung weiterhin umfasst
einen Referenzseitenreflektor (33), der von dem Hauptkörperbereich (26) des Laserinterferometers (32) getrennt ist, und
einen ausfahrbaren rektilinearen Führungsmechanismus (34), in dem der entsprechende Referenzseitenreflektor (33) und der Interferometerhauptkörperbereich (26) aneinander gekoppelt sind, wobei der Referenzseitenreflektor (33) in Kontakt mit der Referenzkugel (14) steht, und in Richtung des Messstrahls angeordnet werden kann, während er zu jeder Zeit in Kontakt mit der Referenzkugel (14) steht, während die Messung ausgeführt wird, und
wobei die Vorrichtung konfiguriert ist, so dass der Abstand von dem Referenzseitenreflektor (33) zu dem Messseitenreflektor (15) gemessen wird.

3. Vorrichtung zum Messen einer Länge durch Laserinterferenznachführung nach Anspruch 2, die konfiguriert ist, so dass, um den rektilinearen Führungsmechanismus (34) in einen eingezogenen Zustand zu bringen, der Abstand zwischen der Referenzkugel (14), dessen Position fixiert ist, und dem Mechanismus zum bogenförmigen Bewegen, um eine bogenförmige Bewegung des Interferometerhauptkörpers um das Zentrum der Referenzkugel (14) auszuführen, eingestellt wird, und dabei ein Schuh (39) des rektilinearen Bewegungsmechanismus mit einer geigneten Kraft Kontakt mit der Oberfläche der Referenzkugel (14) hält.

4. Vorrichtung zum Messen einer Länge durch Laserinterferenznachführung nach Anspruch 2, wobei der ausfahrbare rektilineare Führungsmechanismus ein rektilinearer Kugelführungsmechanismus (34) ist, der eine Kugelbuchsenstruktur aufweist, die rektilinear verschiebbar ist und die eine darin intern eingehäuste Kompressionsfederkomponente (41) aufweist, so dass ein zylindrisches Innengehäuse (35) mit dem darin eingehäusten Referenzseitenreflektor (33) und ein Außenzylinder (36) zwischen der Referenzkugel (14) und dem Interferometerhauptkörper (26) gegenseitig abgestützt werden.

5. Vorrichtung zum Messen einer Länge durch Laserinterferenznachführung nach Anspruch 4, wobei, obwohl der Schuh (39) des rektilinearen Kugelführungsmechanismus (34) als geometrischer Einpunktkontakt mit der Referenzkugel (14) konfiguriert ist, ein kleiner Fixiersitz bestehend aus drei kleinen Kugeln in einer äquilateralen dreieckigen Anordnung auf dem Schuh (39) bereitgestellt ist, so dass das zylindrische Innengehäuse (35), in dem der Referenzseitenreflektor (33) untergebracht ist, konfiguriert ist, dass es nicht weiter hinsichtlich des Interferometerhauptkörpers (26) sicher geneigt ist, wobei der Fixiersitz konfiguriert ist, dass er in Kontakt mit der Referenzkugel (14) gebracht wird und dass er zu jeder Zeit, während die Messung ausgeführt wird, stabil in Kontakt mit der Oberfläche der Referenzkugel (14) bleibt.

6. Vorrichtung zum Messen einer Länge durch Laserinterferenznachführung nach Anspruch 2, wobei der Interferometerhauptkörper (26) auf dem Mechanismus zum bogenförmigen Bewegen fixiert ist, wobei der Mechanismus zum bogenförmigen Bewegen selbst so konstruiert ist, dass er sich mit dessen Zentrum, das gemeinsam als das Zentrum der Referenzkugel (14) verwendet wird, dreht, und wobei das Laserinterferometer als Teil einer Nachführeinheit konfiguriert ist, den Abstand zu dem Messseitenreflektor (15) als ein Ziel zu messen.

7. Vorrichtung zum Messen einer Länge durch Laserinterferenznachführung nach Anspruch 2, wobei der Mechanismus zum bogenförmigen Bewegen, der ein gemeinsames Zentrum mit der Referenzkugel (14) aufweist, fixiert ist, und wobei der Interferometerhauptkörper (26) konfiguriert ist, eine bogenförmige Bewegung auszuführen, während er entlang dem Mechanismus zur bogenförmigen Bewegung läuft.

8. Vorrichtung zum Messen einer Länge durch Laserinterferenznachführung nach Anspruch 2, wobei der Mechanismus zum bogenförmigen Bewegen zwei Drehmechanismen aufweist, in denen der Azimutwinkel und der Höhenwinkel unabhängig voneinander sind, wobei der Interferometerhauptkörper (26) in dem Höhenwinkeldrehmechanismus montiert ist, und wobei der Höhenwinkeldrehmechanismus in dem Azimutdrehmechanismus montiert ist.

9. Vorrichtung zum Messen einer Länge durch Laserinterferenznachführung nach Anspruch 2, wobei der Mechanismus zum bogenförmigen Bewegen einen ersten Höhenwinkeldrehmechanismus zum Drehen eines kreisförmigen Rahmens um die horizontale Achse zentriert um die Referenzkugel und einen zweiten Höhenwinkeldrehmechanismus zum Drehen des Interferometerhauptkörpers (26), während derselbe entlang des kreisförmigen Rahmens läuft, einschließt.

10. Vorrichtung zum Messen einer Länge durch Laserinterferenznachführung nach Anspruch 2, wobei der Mechanismus zum bogenförmigen Bewegen einen Azimutwinkeldrehmechanismus zum Drehen des kreisförmigen Rahmens (44) um die vertikale Achse zentriert um die Referenzkugel (14) und einen Höhenwinkeldrehmechanismus zum Drehen des Interferometerhauptkörpers (26), während derselbe entlang des kreisförmigen Rahmens (44) läuft, einschließt.

11. Vorrichtung zum Messen einer Länge durch Laserinterferenznachführung nach Anspruch 2, die zwei Lagermechanismen (66, 67) bestehend aus einem äußeren Ring (64) und einem inneren Ring (65) als einen Mechanismus zum Vorgeben eines Höhenwinkels des Mechanismus zum bogenförmigen Bewegen einschließt.

## Revendications

1. Procédé de mesure d'une longueur par traçage d'interférence laser, employant :
une sphère de référence (14) constituée comme une référence de mesure,
un réflecteur côté mesure (15) agencé sur un objet à mesurer,
un interféromètre laser (32) pour sortir une valeur de mesure conformément à une augmentation et à une diminution de la distance jusqu'au réflecteur côté mesure correspondant (15), et
un mécanisme de mouvement arqué pour faire tourner un faisceau d'émission depuis l'interféromètre laser correspondant (32), centré sur la sphère de référence (14) ; et
le procédé étant adapté pour mesurer la distance jusqu'au réflecteur côté mesure (15) à laquelle les axes optiques d'un faisceau d'émission de l'interféromètre laser (32) placé sur le mécanisme de mouvement arqué et d'un faisceau de retour correspondant deviennent parallèles entre eux en référençant les coordonnées du centre de la sphère de référence (14) ;
**caractérisé en ce que**
un réflecteur côté référence (33) qui est séparé de la partie de corps principal (26) de l'interféromètre laser (32) est fourni, le réflecteur côté référence est amené en contact avec la sphère de référence (14), et est conçu de manière à être déplacé en direction du faisceau de mesure tout en restant en contact avec la surface de la sphère de référence (14) à tout moment pendant que la mesure est effectuée, et
la distance entre le réflecteur côté référence (33) et le réflecteur côté mesure (15) est mesurée.

2. Appareil de mesure d'une longueur par traçage d'interférence laser, comprenant :
une sphère de référence (14) constituée comme une référence de mesure,
un réflecteur côté mesure (15) agençable sur un objet à mesurer,
un interféromètre laser (32) pour sortir une valeur de mesure conformément à une augmentation et à une diminution de la distance jusqu'au réflecteur côté mesure correspondant (15), et
un mécanisme de mouvement arqué pour faire tourner un faisceau d'émission depuis l'interféromètre laser correspondant (32), centré sur la sphère de référence (14) ; et
l'appareil étant adapté pour mesurer la distance jusqu'au réflecteur côté mesure (15) à laquelle les axes optiques d'un faisceau d'émission de l'interféromètre laser (32) placé sur le mécanisme de mouvement arqué et d'un faisceau de retour correspondant deviennent parallèles entre eux en référençant les coordonnées du centre de la sphère de référence (14) ;
**caractérisé en ce que** l'appareil comprend en outre
un réflecteur côté référence (33) séparé de la partie de corps principal (26) de l'interféromètre laser (32), et
un mécanisme de guidage rectiligne extensible (34) dans lequel le réflecteur côté référence correspondant (33) et la partie de corps principal de l'interféromètre (26) sont accouplés entre eux, le réflecteur côté référence (33) étant en contact avec la sphère de référence (14), et déplaçable en direction du faisceau de mesure tout en restant en contact avec la sphère de référence (14) à tout moment pendant que la mesure est effectuée, et
l'appareil étant configuré de telle sorte que la distance entre le réflecteur côté référence (33) et le réflecteur côté mesure (15) est mesurée.

3. Appareil de mesure d'une longueur par traçage d'interférence laser selon la revendication 2, configuré de telle sorte que, pour amener le mécanisme de guidage rectiligne (34) dans un état comprimé, l'intervalle entre la sphère de référence (14) dont la position est fixée et le mécanisme de mouvement arqué pour effectuer un mouvement arqué du corps principal de l'interféromètre autour du centre de la sphère de référence (14) est ajusté, et un sabot (39) du mécanisme de mouvement rectiligne maintient ainsi le contact avec la surface de la sphère de référence (14) avec une force appropriée.

4. Appareil de mesure d'une longueur par traçage d'interférence laser selon la revendication 2, dans lequel le mécanisme de guidage rectiligne extensible est un mécanisme de guidage de rotule rectiligne (34) comportant une structure à bague de rotule déplaçable de façon rectiligne et comprenant un composant à ressort de compression (41) qui y est logé de façon interne de telle sorte qu'un logement cylindrique interne (35) dans lequel est logé le réflecteur côté référence (33) et un cylindre externe (36) sont supportés entre eux entre la sphère de référence (14) et le corps principal de l'interféromètre (26).

5. Appareil de mesure d'une longueur par traçage d'interférence laser selon la revendication 4, dans lequel, bien que le sabot (39) du mécanisme de guidage de rotule rectiligne (34) soit configuré pour constituer géométriquement un contact à point unique avec la sphère de référence (14), un petit siège de fixation consistant en trois petites sphères à agencement triangulaire équilatéral est préparé sur le sabot (39) de telle sorte que le logement cylindrique interne (35) dans lequel est reçu le réflecteur côté référence (33) est configuré pour ne pas être incliné davantage de manière sûre par rapport au corps principal de l'interféromètre (26), et le siège de fixation est configuré pour être amené en contact avec la sphère de référence (14) et pour rester en contact de manière stable avec la surface de la sphère de référence (14) à tout moment pendant que la mesure est effectuée.

6. Appareil de mesure d'une longueur par traçage d'interférence laser selon la revendication 2, dans lequel le corps principal de l'interféromètre (26) est fixé sur le mécanisme de mouvement arqué, le mécanisme de mouvement arqué lui-même est conçu de manière à tourner avec son centre utilisé généralement comme le centre de la sphère de référence (14), et l'interféromètre laser comme élément d'une unité de traçage est configuré pour mesurer la distance jusqu'au réflecteur côté mesure (15) comme cible.

7. Appareil de mesure d'une longueur par traçage d'interférence laser selon la revendication 2, dans lequel le mécanisme de mouvement arqué, ayant son centre généralement utilisé comme le centre de la sphère de référence (14), est fixé, et le corps principal de l'interféromètre (26) est configuré pour effectuer un mouvement arqué en passant le long du mécanisme de mouvement arqué.

8. Appareil de mesure d'une longueur par traçage d'interférence laser selon la revendication 2, dans lequel le mécanisme de mouvement arqué comporte deux mécanismes de rotation où l'angle d'azimut et l'angle d'élévation sont indépendants l'un de l'autre, le corps principal de l'interféromètre (26) est monté dans le mécanisme de rotation d'angle d'élévation, et le mécanisme de rotation d'angle d'élévation est monté dans le mécanisme de rotation d'azimut.

9. Appareil de mesure d'une longueur par traçage d'interférence laser selon la revendication 2, dans lequel le mécanisme de mouvement arqué comprend un premier mécanisme de rotation d'angle d'élévation pour faire tourner un cadre circulaire autour de l'axe horizontal centré autour de la sphère de référence et un deuxième mécanisme de rotation d'angle d'élévation pour faire tourner le corps principal de l'interféromètre (26) en passant le long du cadre circulaire.

10. Appareil de mesure d'une longueur par traçage d'interférence laser selon la revendication 2, dans lequel le mécanisme de mouvement arqué comprend un mécanisme de rotation d'angle d'azimut pour faire tourner le cadre circulaire (44) autour de l'axe vertical centré autour de la sphère de référence (14), et un mécanisme de rotation d'angle d'élévation pour faire tourner le corps principal de l'interféromètre (26) en passant le long du cadre circulaire (44).

11. Appareil de mesure d'une longueur par traçage d'interférence laser selon la revendication 2, comportant deux mécanismes de roulement (66, 67) consistant en un anneau externe (64) et un anneau interne (65) comme mécanisme pour fournir un angle d'élévation du mécanisme de mouvement arqué.
